# EUROPEAN PATENT APPLICATION

(11) **EP 3 945 659 A1**
(43) Date of publication of application: **02.02.2022**
(21) Application number: 21182014.7
(22) Date of filing: 28.06.2021
(51) Int. Cl.: H02K 1/27, H02K 7/04, H01F 7/02

(54) **A HERMETIC COMPRESSOR WITH A MAGNET HAVING A COATED SURFACE**

(30) Priority: 29.07.2020 TR 202012067
(71) Applicant: Arçelik Anonim Sirketi, 34445 Istanbul (TR)
(72) Inventor: CETINTURK, Tugba, 34445 ISTANBUL (TR); GUNDUZ, Cihan, 34445 ISTANBUL (TR)

(57) **Abstract**

The present invention relates to a hermetic compressor (1) comprising; a housing (2), a rotor stack (3) and a stator (4) inside the housing (2) and wherein the stator (4) is placed around the rotor stack (3) so as to be concentric with the rotor stack (3) around a rotation axis (I), a magnet (5) placed inside a hole (6) provided on the rotor stack (3) to extend along the direction of the rotation axis (I).

## Description

The present invention relates to a hermetic compressor, in particular to a hermetic compressor with a magnet having a coated surface.

A cooling appliance typically utilizes a hermetic compressor to cyclically convey the refrigerant from an evaporator to a condenser. The hermetic compressor is formed by a housing, hermetically isolating the operational parts such as the rotor and the stator of the hermetic compressor from the outer environment. During the operation of the hermetic compressor, the rotor rotates. The rotation of the rotor is realized by means of plurality permanent magnets placed inside the rotor stack wherein the said magnets extend along the rotation axis of the rotor stack. The magnets are in close vicinity of other parts of the compressor which are produced from metallic components. This causes flux leakage from magnets through the metallic components which in turn affects the compressor efficiency negatively. In order to prevent this, the rotor stack is covered by a plate having magnetic insulation properties. However, such materials of the plates which provide magnetic insulation are expensive and increases the manufacturing cost of the hermetic compressor. Additionally, assembly of said plates which are also used to fix the magnets inside the rotor stack increase labour related costs and time spent for assembly of plates.

A prior art publication in the technical field of the present invention may be referred to as KR20080015573A among others, the document disclosing a synchronous motor for a hermetic compressor to improve performance and reliability of the synchronous motor by reducing abnormal abrasion of sliding part and performing magnetic insulation with an insulating plate.

A prior art publication in the technical field of the present invention may be referred to as US2019379248A1 among others, the document disclosing an interior permanent magnet motor, and more particularly, an interior permanent magnet motor having consequent poles.

An objective of the present invention is to eliminate the use of plates having magnetic flux insulating properties which are expensive.

The objective has been achieved by coating the lower and upper ends of the magnets by a magnetic insulation material.

The method realized to achieve the aim of the present invention and disclosed in the first claim and the dependent claims comprises a hermetic compressor. The hermetic compressor of the present invention comprises a housing, hermetically separating the interior volume of the hermetic compressor from the outer environment. The housing houses a rotor and a stator wherein the stator is placed around the rotor so as to be concentric with the rotor. The concentricity of the rotor and the stator lies along a rotation axis. As the hermetic compressor is energized, the rotor, along with a shaft passing through the rotor stack, starts to rotate around the rotation axis. The rotor stack is in the shape of a cylinder having two planar surfaces. The rotor stack is provided with plurality of holes extending parallel to the direction of the rotation axis. A magnet is placed inside the said hole. The magnets are in an elongated shape and the comprises a first end and a second end. The said ends are coated with a magnetic insulating material. The magnetic insulating material prevents magnetic flux leakage from the magnets through compressor metal parts. By means of coating the ends of the magnets, magnetization of the operational metallic parts of the hermetic compressor is minimized. This helps increase the operation efficiency of the hermetic compressor. Another advantageous effect provided by means of the magnets having coated ends is that the plate to be used to cover the magnets and the rotor stack does not need to be produced from a plate having magnetic flux insulating properties. This helps reduce material related costs significantly.

In another embodiment of the invention, the ends of the magnets form a planar surface that are parallel to each other and perpendicular to the direction of the rotation axis. This keeps active magnetic flux within the motor circuit and provides the motor work more efficiently with higher back emf voltage. After the coating of the magnets, the said ends form a planar surface.

In another embodiment of the invention, the rotor stack is in cylindrical shape. The ends of the rotor stack form two planar surfaces and the said surface are at partly covered by a plate. The plate is produced from a sheet of material. The said plate is produced from a material that does not have magnetically insulation property as this is already achieved by means of the coating, coating the first end and the second end of the magnet. Therefore, a cheaper material with smaller dimension not covers all the planar surface but just hold the magnets inside the stack can be used as the plate such as a sheet of scrap metal. This helps reduce the manufacturing costs of the hermetic compressor.

In another embodiment of the invention, planar surface of the rotor stack is either covered by the plate or the counterweight such that the projection of the counterweight and the plate along the rotation axis does not coincide.

In another embodiment of the invention, the projection of the holes and therefore the magnets are either covered by the plate or the counterweight along the projection of the rotation axis. By means of this, area of the plate can be reduced which results in lower manufacturing costs.

In another embodiment of the invention, the counterweight and the plate are fixed onto the rotor stack via a fixing means. The fixing means can be a bolt, screw or any other suitable fixing means.

In the hermetic compressor of the present invention, the magnetic flux leakage caused by the magnets placed inside the rotor through the metallic parts is minimized by means of coating the magnets with magnetic insulating material.

Another advantageous effect provided by means of the present invention is that the use of magnets covered with magnetic insulating material eliminates the need to use plates to cover the rotor stack having magnetic flux insulating properties, thereby decreasing manufacturing costs.

The drawings are not meant to delimit the scope of protection as identified in the claims nor should they be referred to alone in an effort to interpret the scope identified in the claims without recourse to the technical disclosure in the description of the present invention.

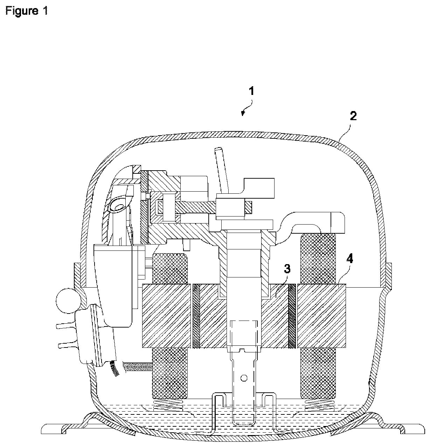

Figure 1 - is a cross sectional side view of the hermetic compressor

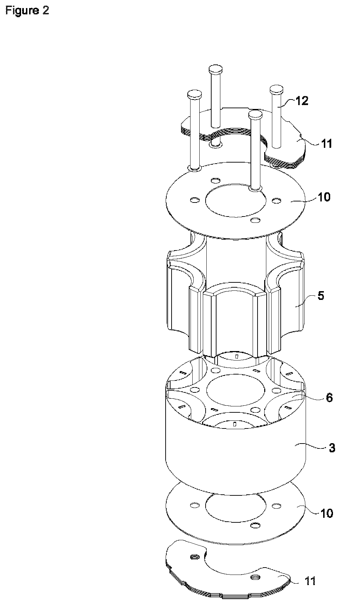

Figure 2 - is an exploded view of the rotor stack and the rotor cover

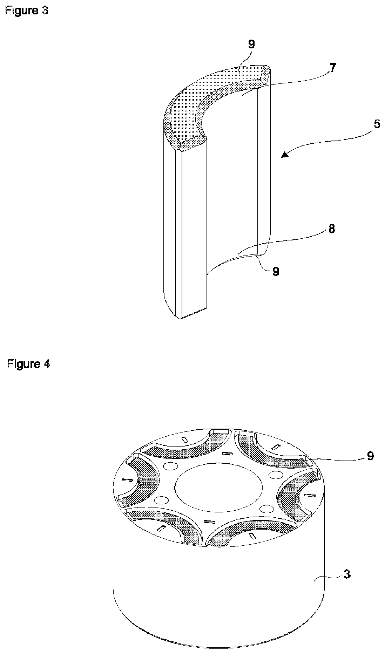

Figure 3 - is an isolated view of the magnet
Figure 4 - is a perspective view of the rotor stack

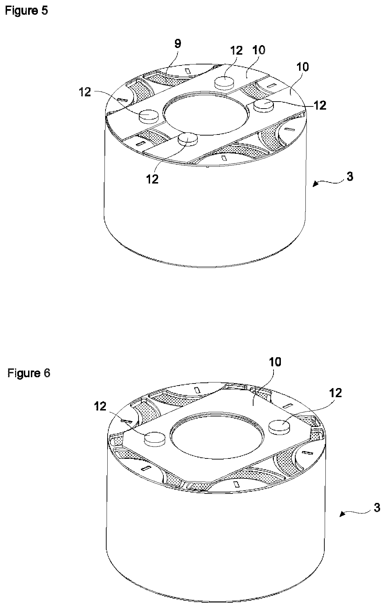

Figure 5 - is a perspective view of the rotor stack and rotor cover
Figure 6 - is a perspective view of the rotor stack and rotor cover

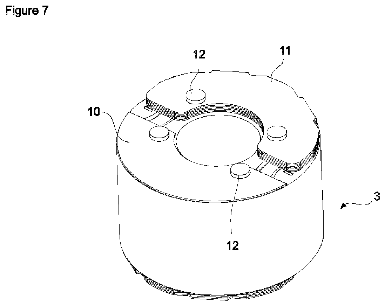

Figure 7 - is a perspective view of the rotor stack, rotor cover and the counterweight

The following numerals are assigned to different parts demonstrated in the drawings and referred to in the present detailed description of the invention:
1. Hermetic Compressor
2. Housing
3. Rotor stack
4. Stator
5. Magnet
6. Hole
7. First end
8. Second end
9. Magnetic insulating material
10. Plate
11. Counterweight
12. Fixing means

The present invention relates to a hermetic compressor (1) comprising; a housing (2), a rotor stack (3) and a stator (4) inside the housing (2) and wherein the stator (4) is placed around the rotor stack (3) so as to be concentric with the rotor stack (3) around a rotation axis (I), a magnet (5) placed inside a hole (6) provided on the rotor stack (3) to extend along the direction of the rotation axis (I).

The present invention relates to a hermetic compressor (1) comprising the magnet (5) wherein the magnet (5) comprises a first end (7) and a second end (8) coated with a magnetic insulating material (9). The magnet (5) is in elongated form and is configured to be shorter than the length of the rotor stack (3) along the rotation axis (I). The rotor stack (3) has plurality of holes (6) wherein plurality of magnets (5) are accommodated. The magnet (5) apart from having an elongated form is in crescent shape and form fittingly seated inside the holes (6). The magnets (5) comprises the first end (7) and the second end (8). The said ends (7,8) are coated with the magnetic insulating material (9). The magnetic insulating material (9) faces outwards from the holes (6). The magnetic insulating material (9) minimizes the magnetic flux extending away from the first end (7) and the second end (8). By means of this, magnetization of metallic parts in close vicinity of the magnets (5) and the rotor stack (3) is prevented. Another advantageous effect provided by means of covering the ends (7,8) of the magnet (5) is that the use of plates having magnetic flux minimizing properties is eliminated, thereby reducing the manufacturing cost of the compressor. (Figure - 1 and 2)

The present invention relates to a hermetic compressor (1) wherein the said ends (7,8) extend parallel to each other and perpendicular to the rotation axis (I). The ends (7,8) are planar which provides a more active magnetic field around the magnets (5) without leakage. The ends (7,8) are provided coated with the magnetic insulating material and the ends of the magnets (5) after the coating form a planar surface. This helps usage of the magnetic flux in a more efficient manner. (Figure - 3 and 4)

The present invention relates to a hermetic compressor (1) wherein the rotor stack (3) comprises two planar surfaces and that the said surfaces are at least partially covered by a plate (10) along the projection of the rotation axis (I). The plate (10) helps keep the magnets (5) in place during the operation of the hermetic compressor (1). The plates (10) are produced from a metallic sheet. Any kind of metallic sheet is suitable as the magnetic flux is actively used by means of the magnetic insulating material coating the ends (7,8). As a result, plates having magnetic flux insulating properties are not utilized which decreases manufacturing related costs. (Figure - 5 and 6)

The present invention relates to a hermetic compressor (1) comprising a counterweight (11) placed on to the planar surfaces such that the projection of the counterweight (11) along the rotation axis (I) does not coincide with that of the plate (10). In order to keep the hermetic compressor (1) operational, the magnets (5) have to be seated inside the holes (6) provided on the rotor stack (3). Therefore, it is preferable to keep the magnets (5) inside the holes (6) by placing plates (10) onto the holes (6). The magnets (5) can also be fixed inside the holes (6) by placing counterweight (11) onto the holes (6). The planar projection of counterweight (11) and that of the plate (10) along the rotation axis (I) does not coincide with each other which helps reduce the area of the plates (10) and therefore, costs related to plate (10). The plate (10) can be produced from scrap metal which helps reduce the manufacturing costs. (Figure - 7)

The present invention relates to a hermetic compressor (1) wherein the projection of the magnet (5) along the rotation axis (I) is at least partially covered by the counterweight (11) or by the plate (10). As it was previously stated, reducing the area covered by the plate (10) helps reduce manufacturing costs related to the plate (10). Therefore, the magnets (5) are at least partially covered by either the counterweight (11) or by the plate (10).

The present invention relates to a hermetic compressor (1) comprising a fixing means (12) passing through the counterweight (11) or the plate (10) and fixing the counterweight (11) or the plate (10) onto the rotor stack (3). The fixing means (12), preferably a bolt or a screw, passes through the counterweight (11) or the plate (10) and are used for fixing the mentioned parts onto the rotor stack (3).

In the hermetic compressor (1) of the present invention, the magnetic flux originating from the magnets (5) and which causes magnetization of metallic parts inside the housing (2) is minimized which helps the motor and compressor to work more efficiently. This is achieved by coating the ends (7,8) of the magnets (5). Another advantageous effect provided by means of the coating is that the use of plates having magnetic insulation properties is eliminated, reducing related costs.

## Claims

1. A hermetic compressor (1) comprising;
a housing (2), a rotor stack (3) and a stator (4) inside the housing (2) and
wherein the stator (4) is placed around the rotor stack (3) so as to be concentric with the rotor stack (3) around a rotation axis (I),
a magnet (5) placed inside a hole (6) provided on the rotor stack (3) to extend along the direction of the rotation axis (I),
**characterized in that**
the magnet (5) comprises a first end (7) and a second end (8) coated with a magnetic insulating material (9).

2. A hermetic compressor (1) according to claim 1, **characterized in that** the said ends (7,8) extend parallel to each other and perpendicular to the rotation axis (I).

3. A hermetic compressor (1) according to any one of the preceding claims, **characterized in that** the rotor stack (3) comprises two planar surfaces and that the said surfaces are at least partially covered by a plate (10) along the projection of the rotation axis (I).

4. A hermetic compressor (1) according to claim 3, **characterized by** a counterweight (11) placed on to the planar surfaces such that the projection of the counterweight (11) along the rotation axis (I) does not coincide with that of the plate (10).

5. A hermetic compressor (1) according to claim 4, **characterized in that** the projection of magnet (5) along the rotation axis (I) is at least partially covered by the counterweight (11) or by the plate (10).

6. A hermetic compressor (1) according to claims 4 or 5, **characterized by** a fixing means (12) passing through the counterweight (11) or the plate (10) and fixing the counterweight (12) or the plate (10) onto the rotor stack (3).
